# EUROPEAN PATENT SPECIFICATION

(11) **EP 4 308 820 B1**
(45) Date of publication and mention of the grant of the patent: **20.08.2025**
(21) Application number: 22709682.3
(22) Date of filing: 28.02.2022
(51) Int. Cl.: F15B 15/06, F15B 15/24

(54) **PIVOT ACTUATOR**
SCHWENKSTELLGLIED
ACTIONNEUR À PIVOT

(30) Priority: 19.03.2021 DE 102021106889
(43) Date of publication of application: 24.01.2024
(73) Proprietor: bar-pneumatische Steuerungssysteme GmbH, 53547 Dattenberg (DE)
(72) Inventor: KROLL, Markus, 53547 Dattenberg (DE); KUHN, Axel, 56589 Niederbreitbach (DE)
(74) Representative: Barker Brettell LLP
(86) International application number: PCT/EP2022/055023
(87) International publication number: WO 2022/194527

(56) References cited:
- EP-A1- 2 495 449
- CN-U- 211 202 472
- IT-A1- MI20 092 229

## Description

The invention relates to a pivot actuator including a housing, a piston that is supported in the housing and displaceable along a longitudinal axis of the housing, a drive shaft that protrudes from the housing, wherein the piston engages the drive shaft by form locking so that the drive shaft is pivoted about a drive axis by a pivot angle to an end position through a displacement of the piston; and a stop element, a switching cam that is fixed torque proof at the drive shaft and configured to contact the stop element at the housing with a convex stop surface at the switching cam, wherein the end position is adjustable by an adjustment angle about the drive axis by displacing the stop element along an adjustment axis that is oriented transversal to the drive axis, and wherein the stop surface follows an involute of a circle about the drive axis.

A generic pneumatic pivot actuator is known e.g. under the product the designation "Keystone Figure 89" by Emerson Electric Co. Saint Louis, MI/US. The known pivot actuator has a pivot angle of 90 degrees with two defined end positions that are adjustable by stop screws within an adjustment angle range of 10 degrees respectively. S-shaped contact surfaces contact end surfaces of the stop screws with partial surfaces of the S-shaped contact surfaces that extend transversal to the drive axis. An actuation angle of the known pivot actuator is limited by permissible positions of a contact point of the contact surface in the end surface of the contact screw that varies with the adjustment.

CN 211202472 describes a swing angle limiting mechanism of a spiral oil cylinder, which comprises an end plate, the end plate is fixed at one end of a shell, and an output shaft, where the end plate can be assembled in a circumferential rotating manner.

Pivot actuators are known in the art that have flat contact surfaces that are arranged at different angles relative to the drive axis after adjustment and that impact the end surfaces which can damage the contact screws.

### OBJECT

Thus, it is an object of the invention to increase the adjustment angle.

### SOLUTION

Improving upon the known pivot actuator it is proposed according to the invention that the involute is arranged in a direction transversal to the drive axis wherein the circle is tangential to the adjustment axis.

The involute designates a path of an end point of a line segment that is wound from a circumference of the circle and is always oriented perpendicular to the line segment.

Since the adjustment axis and the line segment are tangents to the circle the contact surface of the pivot actuator according to the invention always impacts the same contact point in the end surface of the contact element in a perpendicular direction. Thus, the adjustment angle is not limited by a size of the end surface but only by the installation space that is usable for the contact surface in a radial direction relative to the drive axis. Thus, a pivot actuator according to the invention can provide an adjustment angle of 25°, 30 ° or more.

Advantageously the adjustment angle of a pivot actuator according to the invention is adjustable by threading the stop element about the adjustment axis. Adjusting the adjustment angle by stop screws is proven and well known in the art. Further advantageously the stop screw is locked at the housing by a lock nut. Alternatively, the stop element can be fixed by clamping devices or by bonding through gluing or soldering at the housing.

Advantageously the switching cam includes a second stop surface in a pivot actuator according to the invention wherein the second stop surface contacts the second stop element arranged at the housing in a second end position of the switching cam. This pivot actuator according to the invention facilitates an exact adjustment of two end positions of a valve, e.g; open and closed.

Advantageously the drive shaft of a pivot actuator according to the invention includes a teething that supports the switching cam torque proof. This couples a movement of the switching cam and of the drive shaft precisely during operations. On the other hand side, the switching cam which is a wear element can be replaced easily.

Advantageously the teething in the pivot actuator according to the invention is rotation symmetrical. Thus, the switching cam can be connected with the drive shaft in plural precisely defined positions. Further advantageously the teething is 8 times rotation symmetrical. A drive shaft of this type with involute teething is known from applicant's product line "agturn".

A pivot actuator according to the invention can include spring elements between the housing and the piston that urge the piston into a neutral position in the range of the pivot angle. A pivot actuator of this type according to the invention reverts to a defined position should a failure occur.

Advantageously a pivot actuator according to the invention includes a pressure tight chamber that is defined by the piston and a fluid connection at the chamber, wherein the piston is displaceable by loading the fluid connection with a fluid. A pivot actuator of this type according to the invention can be driven hydraulically of pneumatically. Alternatively, a pivot actuator according to the invention can be driven electromagnetically or mechanically.

Advantageously a pivot actuator according to the invention includes a second pressure tight second chamber defined by the piston and a second fluid connection at the second chamber, wherein the piston is moveable back and forth by loading the second fluid connection. A position of this pivot actuator according to the invention is controllable by a pressure difference between the first fluid connection and the second fluid connection.

Advantageously a pivot actuator according to the invention includes a second piston that is moveable in the housing along the longitudinal axis wherein the second piston engages the drive shaft by form locking so that the drive shaft is pivoted relative to the first piston when the second piston is moved contrary to the first piston

The second piston compensates a bending load that is imparted by the first piston upon the drive shaft and causes a symmetrical force transmission between the piston and the drive shaft. Additionally, the second piston doubles an effective surface that transfers force from the fluid without significantly increasing a size of the pivot actuator. Alternatively, a simpler pivot actuator according to the invention can include only one piston.

Ferrous metals or non-ferrous metals and synthetic materials can be used for the switching cam depending on load conditions.

### EMBODIMENTS

The invention is subsequently described based on embodiments with reference to drawing figures, wherein:
FIG. 1 illustrates a pivot actuator according to the invention;
FIG. 2a/b illustrates two sectional views of the pivot actuator;
FIG. 3a/b illustrates an internal view of the pivot actuator in two end positions;
FIG. 4a illustrates a switching cam of the pivot actuator; and
FIG. 4b illustrates an exploded view of the switching cam.
FIG. 5 illustrates a detail of the switching cam;
FIG. 6a, b illustrates an internal view of a second pivot actuator according to the invention; and
FIG. 7 illustrates the switching cam of the second pivot actuator.

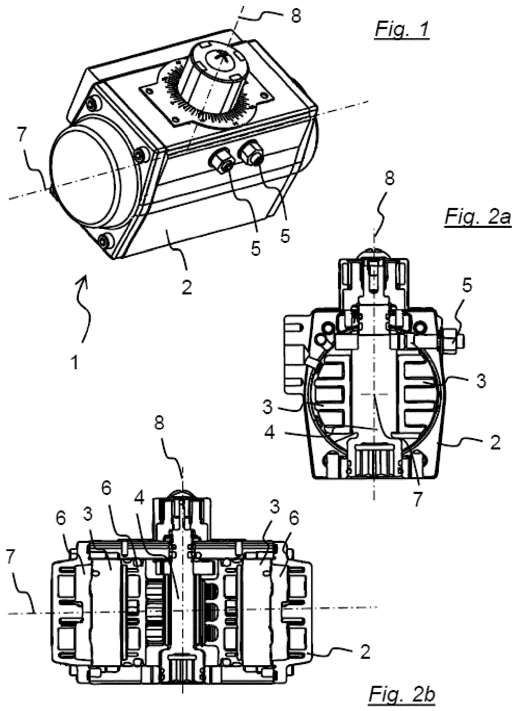

The pivot actuator 1 according to the invention shown in FIGs. 1, 2a/b and 3a/b includes a housing 2, two pistons 3 included in the housing 2 and a drive shaft 4 that protrudes from the housing 2 and two stop elements 5.

The pistons 3 define one pressure tight chamber 6 between each other and two pressure tight chambers 6 in combination with the housing 2. The pistons 3 are displaceable in the housing 2 counteracting along a longitudinal axis 7 of the housing 2 and the driveshaft 4 is pivotable about a drive axis 8.

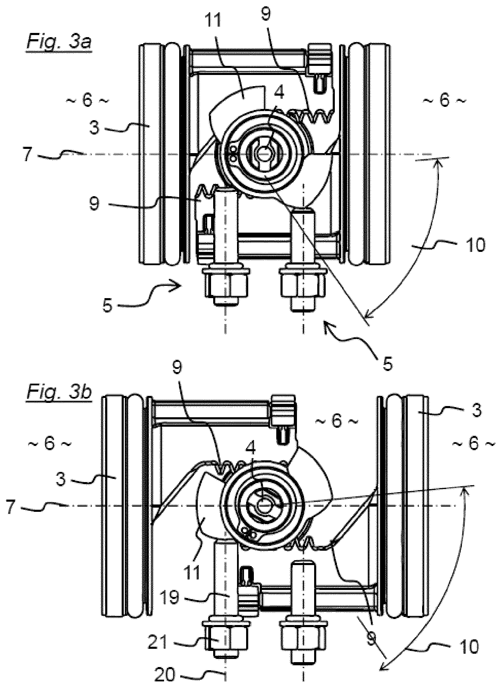

The pistons 3 and the driveshaft 4 include teethings 9 that engage each other by form locking. Loading the chamber 6 through non-illustrated pressure connections at the housing 2 with compressed air moves the pistons 3 and the drive shaft 4 is pivoted by the teethings 9 by a pivot angle 10 that is illustrated in FIGs. 3a/b, between end positions of 0 degrees and 60 degrees.

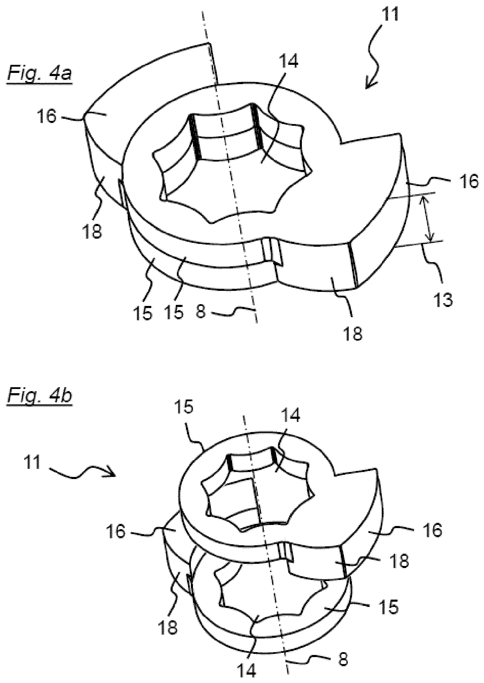

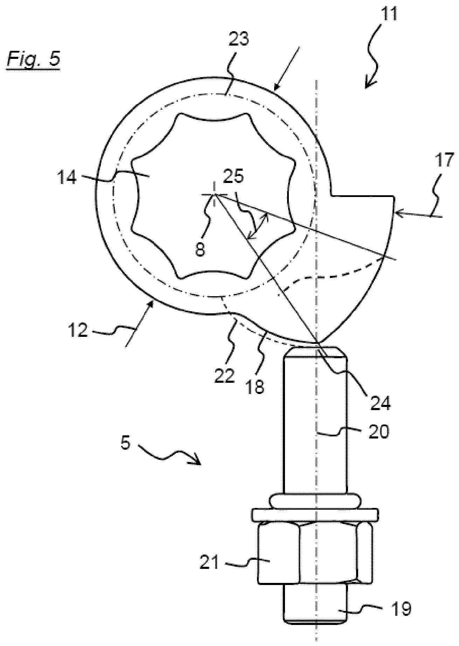

A switching cam 11 is attached at the drive axis 8 in the housing 2 and illustrated in detail in FIGs. 4a/b, and 5. The switching cam 11 has a circular disc shaped base structure with a diameter 12 of 30 mm and a thickness 13 of 9 mm and includes an axial receiving opening 14. The receiving opening 14 is shaped as an eight pointed star with rounded corners that fixes the switching cam 11 on the drive shaft 4 through a longitudinal teething.

The switching cam 11 includes two identical discs 15 that are rotated relative to each other along the drive axis 8, that are loosely placed on top of each other and made from the case-hardened material 1.0503/C45 respectively including a radial protrusion 16 that has a thickness of the switching cam 11 and a radius 17 of 24.5 mm. A respective contact surface 18 is configured at the protrusion.

The stop elements 5 respectively include a set screw 19 that is threaded into the housing 2 along an adjustment axis 20 and a lock nut 21 that locks the set screw 19 at the housing 2. The stop surface 18 follows an involute 22 about the circle 23 about the drive axis 8 wherein the circle 23 contacts the adjustment axis 20. Thus the contact point 24 in the stop surface 18 is arranged on the adjustment axis 20 in each permissible end position.

FIG. 5 illustrates the switching cam 11 in the maximum permissible end position and in dashed lines in the minimum permissible end position. The first pivot actuator 1 has a nominal pivot angle of 90 degrees. Limits for the end position adjustment for the 0 degree end position of the first pivot actuator 1 are at - 5 degrees and + 30 degrees, for the 90 degree end position the limits are at 60 degrees and 95 degrees. The adjustment angle 25 of the switching cam 11 between the limits of the end position adjustment is 35 degrees.

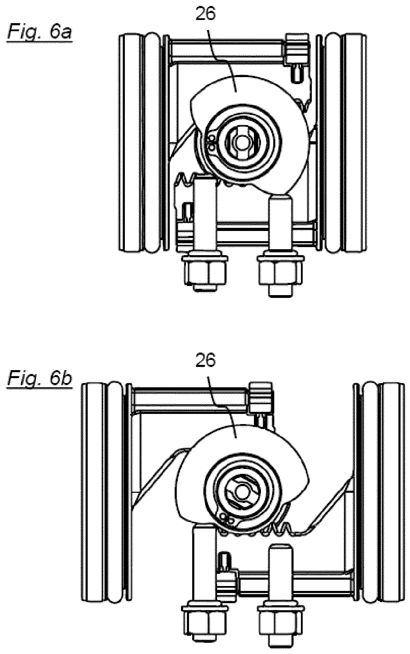

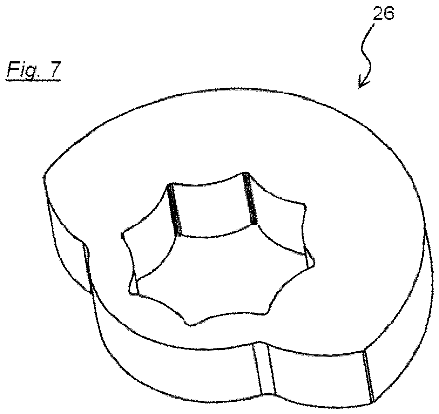

FIGs. 6a/b show interior views of the end positions for a second pivot actuator according to the invention. The second pivot actuator corresponds to the first pivot actuator besides the switching cam 26 that is illustrated in detail in FIG. 7. Also the switching cam 26 of the second pivot actuator includes the basic structure and the receiving opening 14 of the switching cam 11 of the first pivot actuator 1, however the switching cam 26 of the second pivot actuator is not assembled from discs 15 but fabricated in one piece.

Two other advantageous pivot actuators differ from the first pivot actuator 1 according to the invention only in that one of the discs 15 is pivoted by 45 degrees or 90 degrees about the pivot axis compared to the first pivot actuator 1 according to the invention. The latter two pivot actuators thus have a nominal pivot angle of 135° or 180°.

### REFERENCE NUMERALS AND DESIGNATIONS

- 1: Pivot Actuator
- 2: Housing
- 3: Piston
- 4: Drive shaft
- 5: Stop element
- 6: Chamber
- 7: Longitudinal axis
- 8: Drive Axis
- 9: Teething
- 10: Pivot Angle
- 11: Switching Cam
- 12: Diameter
- 13: Thickness
- 14: Receiving Opening
- 15: Disc
- 16: Protrusion
- 17: Radius
- 18: Contact Surface
- 19: Set Screw
- 20: Adjustment Axis
- 21: Locking Nut
- 22: involute
- 23: circle
- 24: contact point
- 25: adjustment angle
- 26: switching cam

## Claims

1. A pivot actuator (1), comprising:
a housing (2);
a piston (3) that is supported in the housing (2) and displaceable along a longitudinal axis (7) of the housing;
a drive shaft (4) that protrudes from the housing (2) wherein the piston (3) engages the drive shaft (4) by form locking so that the drive shaft (4) is pivoted about a drive axis (8) by a pivot angle (10) to an end position through a displacement of the piston; and
a stop element (5);
a switching cam (11, 26) that is fixed torque proof at the drive shaft (4) and configured to contact the stop element (5) at the housing (2) with a convex stop surface (18) at the switching cam (11, 26),
wherein the end position is adjustable by an adjustment angle (25) about the drive axis (8) by displacing the stop element (5) along an adjustment axis (20) transversal to the drive axis (8), and wherein the stop surface (18) follows an involute (22) of a circle (23) about the drive axis (8),
**characterized in that** the involute is arranged in a direction transversal to the drive axis (8), wherein the circle (23) is tangential to the adjustment axis (20).

2. The pivot actuator (1) according to claim 1, **characterized by** an adjustment angle (25) of at least 25°, advantageously at least 30°.

3. The pivot actuator (1) according to one of the preceding claims, **characterized in that** the adjustment angle (25) is adjustable by threading the stop element (5) about the adjustment axis (20).

4. The pivot actuator (1) according to one of the preceding claims, **characterized in that** the switching cam (11, 26) includes a second stop surface (18) that contacts a second stop element (5) arranged at the housing (2) in a second end position of the switching cam.

5. The pivot actuator (1) according to one of the preceding claims, **characterized in that** the drive shaft (4) includes a teething wherein the switching cam (11, 26) is supported torque proof at the teething.

6. The pivot actuator (1) according to claim 5, **characterized in that** the teething is rotation symmetrical, advantageously eight times rotation symmetrical.

7. The pivot actuator (1) according to one of the preceding claims, **characterized by** spring elements arranged between the housing and the piston that urge the piston into a neutral position within the pivot angle.

8. The pivot actuator (1) according to one of the preceding claims, **characterized by** a pressure tight chamber (6) that is defined by the piston (3) and a fluid connection at the chamber (6), wherein the piston (3) is displaceable by loading the fluid connection with a fluid.

9. The pivot actuator (1) according to claim 8, **characterized by** a second pressure tight chamber (6) that is defined by the piston (3) and a second fluid connection at the second pressure tight chamber (6), wherein the piston (3) is moveable backward by loading the second fluid connection.

10. The pivot actuator (1) according to one of the preceding claims, **characterized by** a second piston (3) that is displaceable in the housing (2) along the longitudinal axis (7), wherein the second piston engages the drive shaft (4) by form locking so that the drive shaft (4) is pivoted when the second piston (3) is displaced contrary to the first piston (3).

## Patentansprüche

1. Schwenkstellglied (1), umfassend:
ein Gehäuse (2);
einen Kolben (3), der in dem Gehäuse (2) gestützt und entlang einer Längsachse (7) des Gehäuses verschiebbar ist;
eine aus dem Gehäuse (2) herausragende Antriebswelle (4), wobei der Kolben (3) formschlüssig an der Antriebswelle (4) angreift, sodass die Antriebswelle (4) durch eine Verschiebung des Kolbens um eine Antriebsachse (8) um einen Schwenkwinkel (10) in eine Endposition verschwenkt wird; und ein Anschlagelement (5);
einen Schaltnocken (11, 26), der drehmomentfest an der Antriebswelle (4) befestigt ist und so konfiguriert ist, dass er das Anschlagelement (5) am Gehäuse (2) mit einer konvexen Anschlagoberfläche (18) am Schaltnocken (11, 26) berührt,
wobei die Endposition um einen Verstellwinkel (25) um die Antriebsachse (8) einstellbar ist, indem das Anschlagelement (5) entlang einer Verstellachse (20) quer zur Antriebsachse (8) verschoben wird, und wobei die Anschlagoberfläche (18) einer Evolvente (22) eines Kreises (23) um die Antriebsachse (8) folgt,
**dadurch gekennzeichnet, dass** die Evolvente in einer Richtung quer zur Antriebsachse (8) angeordnet ist, wobei der Kreis (23) tangential zur Verstellachse (20) verläuft.

2. Schwenkstellglied (1) nach Anspruch 1, **gekennzeichnet durch** einen Verstellwinkel (25) von mindestens 25°, vorteilhafterweise von mindestens 30°.

3. Schwenkstellglied (1) nach einem der vorstehenden Ansprüche, **dadurch gekennzeichnet, dass** der Verstellwinkel (25) durch Einfädeln des Anschlagelements (5) um die Verstellachse (20) einstellbar ist.

4. Schwenkstellglied (1) nach einem der vorstehenden Ansprüche, **dadurch gekennzeichnet, dass** der Schaltnocken (11, 26) eine zweite Anschlagoberfläche (18) einschließt, die in einer zweiten Endstellung des Schaltnockens ein am Gehäuse (2) angeordnetes zweites Anschlagelement (5) berührt.

5. Schwenkstellglied (1) nach einem der vorstehenden Ansprüche, **dadurch gekennzeichnet, dass** die Antriebswelle (4) eine Verzahnung einschließt, wobei der Schaltnocken (11, 26) an der Verzahnung drehmomentfest abgestützt ist.

6. Schwenkstellglied (1) nach Anspruch 5, **dadurch gekennzeichnet, dass** die Verzahnung rotationssymmetrisch ist, vorteilhafterweise achtfach rotationssymmetrisch.

7. Schwenkstellglied (1) nach einem der vorstehenden Ansprüche, **gekennzeichnet durch** zwischen dem Gehäuse und dem Kolben angeordnete Federelemente, die den Kolben in eine neutrale Position innerhalb des Schwenkwinkels drängen.

8. Schwenkstellglied (1) nach einem der vorstehenden Ansprüche, **gekennzeichnet durch** eine druckdichte Kammer (6), die durch den Kolben (3) und eine Fluidverbindung an der Kammer (6) begrenzt ist, wobei der Kolben (3) durch Beaufschlagung der Fluidverbindung mit einem Fluid verschiebbar ist.

9. Schwenkstellglied (1) nach Anspruch 8, **gekennzeichnet durch** eine zweite druckdichte Kammer (6), die durch den Kolben (3) und eine zweite Fluidverbindung an der zweiten druckdichten Kammer (6) begrenzt ist, wobei der Kolben (3) durch Beaufschlagung der zweiten Fluidverbindung rückwärts bewegbar ist.

10. Schwenkstellglied (1) nach einem der vorstehenden Ansprüche, **gekennzeichnet durch** einen zweiten Kolben (3), der im Gehäuse (2) entlang der Längsachse (7) verschiebbar ist, wobei der zweite Kolben formschlüssig an der Antriebswelle (4) angreift, sodass die Antriebswelle (4) verschwenkt wird, wenn der zweite Kolben (3) entgegen dem ersten Kolben (3) verschoben wird.

## Revendications

1. Actionneur à pivot (1), comprenant :
un logement (2) ;
un piston (3) qui est supporté dans le logement (2) et peut se déplacer le long d'un axe longitudinal (7) du logement ;
un arbre d'entraînement (4) qui fait saillie du logement (2) dans lequel le piston (3) s'engage dans l'arbre d'entraînement (4) par verrouillage de forme de sorte que l'arbre d'entraînement (4) pivote autour d'un axe d'entraînement (8) par un angle de pivotement (10) jusqu'à une position finale par un déplacement du piston ; et un élément de butée (5) ;
une came de commutation (11, 26) qui est fixe à l'épreuve du couple au niveau de l'arbre d'entraînement (4) et configurée pour entrer en contact avec l'élément de butée (5) au niveau du logement (2) avec une surface de butée (18) convexe au niveau de la came de commutation (11, 26),
dans lequel la position d'extrémité est réglable par un angle de réglage (25) autour de l'axe d'entraînement (8) en déplaçant l'élément de butée (5) le long d'un axe de réglage (20) transversal à l'axe d'entraînement (8), et dans lequel la surface de butée (18) suit une courbe (22) d'un cercle (23) autour de l'axe d'entraînement (8),
**caractérisé en ce que** la courbe est agencée dans une direction transversale à l'axe d'entraînement (8), dans lequel le cercle (23) est tangentiel à l'axe de réglage (20).

2. Actionneur à pivot (1) selon la revendication 1, **caractérisé par** un angle de réglage (25) d'au moins 25°, avantageusement d'au moins 30°.

3. Actionneur à pivot (1) selon l'une des revendications précédentes, **caractérisé en ce que** l'angle de réglage (25) est réglable en enfilant l'élément de butée (5) autour de l'axe de réglage (20).

4. Actionneur à pivot (1) selon l'une des revendications précédentes, **caractérisé en ce que** la came de commutation (11, 26) comporte une deuxième surface de butée (18) qui entre en contact avec un deuxième élément de butée (5) agencé au niveau du logement (2) dans une deuxième position finale de la came de commutation.

5. Actionneur à pivot (1) selon l'une des revendications précédentes, **caractérisé en ce que** l'arbre d'entraînement (4) comporte une denture, dans lequel la came de commutation (11, 26) est supportée à l'épreuve du couple au niveau de la denture.

6. Actionneur à pivot (1) selon la revendication 5, **caractérisé en ce que** la denture est symétrique en rotation, avantageusement huit fois symétrique en rotation.

7. Actionneur à pivot (1) selon l'une des revendications précédentes, **caractérisé par** des éléments à ressort agencés entre le logement et le piston qui poussent le piston dans une position neutre à l'intérieur de l'angle de pivotement.

8. Actionneur à pivot (1) selon l'une des revendications précédentes, **caractérisé par** une chambre (6) étanche à la pression qui est définie par le piston (3) et une connexion de fluide au niveau de la chambre (6), dans lequel le piston (3) est déplaçable en chargeant la connexion de fluide avec un fluide.

9. Actionneur à pivot (1) selon la revendication 8, **caractérisé par** une deuxième chambre (6) étanche à la pression qui est définie par le piston (3) et une deuxième connexion de fluide au niveau de la deuxième chambre (6) étanche à la pression, dans lequel le piston (3) est mobile vers l'arrière en chargeant la deuxième connexion de fluide.

10. Actionneur à pivot (1) selon l'une des revendications précédentes, **caractérisé par** un deuxième piston (3) qui est déplaçable dans le logement (2) le long de l'axe longitudinal (7), dans lequel le deuxième piston engage l'arbre d'entraînement (4) par verrouillage de forme de sorte que l'arbre d'entraînement (4) pivote lorsque le deuxième piston (3) est déplacé à l'opposé du premier piston (3).
